# EUROPEAN PATENT SPECIFICATION

(11) **EP 2 781 814 B1**
(45) Date of publication and mention of the grant of the patent: **29.06.2016**
(21) Application number: 14160460.3
(22) Date of filing: 18.03.2014
(51) Int. Cl.: F16L 3/26

(54) **Support channel**
Unterstützungskanal
Canal de support

(30) Priority: 19.03.2013 NL 2010478; 11.04.2013 NL 2010617; 11.04.2013 NL 2010618
(43) Date of publication of application: 24.09.2014
(73) Proprietor: J. van Walraven Holding B.V., 3641 RK Mijdrecht (NL)
(72) Inventor: Nijdam, Frank, 3891 CZ Zeewolde (NL); Juzak, Marek, 3641 ZS Mijdrecht (NL)
(74) Representative: EP&C

(56) References cited:
- EP-A1- 1 011 181
- EP-A1- 1 113 552
- EP-A1- 2 216 575
- EP-A1- 2 365 595
- EP-A2- 0 094 321
- WO-A1-02/11261
- DE-A1- 2 814 701
- DE-U1- 29 603 604
- DE-U1-202006 006 082
- FR-A1- 2 727 578
- FR-A1- 2 922 290
- GB-A- 2 099 103
- US-A- 2 656 999
- US-A- 3 810 490
- US-A- 4 194 711
- US-A- 4 765 577
- US-A- 4 905 939
- US-A- 5 067 679
- US-A- 5 271 585
- US-A1- 2002 006 312
- US-A1- 2009 084 910

## Description

The present invention relates to a support channel for a pipe. The support channel has an elongate form with an open top and an arched channel wall in cross section.

Such a support channel is known made of metal. Such channels are used on plastic pipes as a reinforcement. Plastic pipes tend to sag if they are not supported at short intervals by e.g. pipe clips, especially if the medium that is transported through the plastic pipe is warm. The metal channels support the pipe from the underside and prevent the undesired deformation of the pipes. As a result, pipe clips to suspend the pipe can be arranged at larger intervals. Also, a metal channel will provide additional safety in case of fire. In general the outer diameter of the pipe corresponds substantially to the inner diameter of the channel. The pipe and the support channel are supported by pipe clips or pipe hangers.

A support channel according to the preamble of claims 1 and 2 is known from document US 4,194,711, respectively.

The present invention has for an object to provide a support channel structure for which the number of pipe clips or pipe hangers can be reduced.

This object is achieved by a support channel according to claim 1.

The interconnecting channel body which receives end portions of the basic channel bodies, in combination with additional fixing means to fix the basic channel bodies to the interconnecting channel bodies provides rigidity to the connection between two basic channel bodies. This rigid connection ensures that the pipe can be supported firmly over a greater length than when loose basic channel bodies are used. As a result the length interval between pipe clips or pipe hangers in a supporting system for plastic pipes can be increased. Consequently the number of pipe clips or pipe hangers can be reduced.

According to this aspect of the invention one of the basic channel body or the interconnecting channel body has at least one bendable tongue and the other of said basic channel body or the interconnecting channel body has at least one corresponding opening through which the tongue can be inserted, wherein the tongue can be folded over an edge of the opening so as to fix the basic channel body and the interconnecting channel body together. This embodiment has the advantage that the fixing means are integrated in the combination of the basic channel body and the interconnecting channel body. Therefore no separate fixing means have to be used, which is advantageous from a logistic point of view.

The basic channel body and the interconnecting channel body each have cut-outs in their channel wall such that bendable tongues are formed, wherein the bendable tongues can be bent out of the channel body surfaces and inserted in an opening formed in the associated channel body by bending away a tongue in that channel body.

Another aspect of the invention is defined by claim 2.

According to this aspect the interconnecting channel body has at its end regions a tangential strip which contour is cut out of the channel wall, which strip is in use broken out of the wall of the channel element such that one end remains attached with the interconnecting channel body and the strip is folded over the open top of the channel body and the free end of the strip is attached to the channel body to bind the basic channel body, the interconnecting channel body and a pipe received in the support channel together.

Preferably the free end of the strip has lateral protrusions. This embodiment has the advantage that the fixing means are entirely integrated in the interconnecting channel body. This has the advantage that no additional fixing features have be formed on the basic channel bodies. Furthermore, the integrated binding strips provide ease of use for the fitter and easy logistics, because there are no additional loose parts necessary.

The interconnecting channel body as described in the above may be called also a support channel joint. Such a support channel joint may be arranged between end portions of two basic channel bodies, wherein the support channel joint has a receiving end portion adapted to receive end portions of the basic channel portions, the joint being provided with fixing means to fix the support channel joint and the basic channel bodies together.

A pipe suspending system may comprise a support channel according to any one of the above described embodiments, furthermore comprising at least one pipe clip or pipe hanger suspending from a support, wherein the pipe clip or pipe hanger is arranged around the support channel and the pipe received in the support channel at the location of the interconnecting channel body.

In a possible application a support channel for a pipe, comprises a plurality of basic channel bodies having an elongate form with an arched channel wall seen in cross section, wherein the end portions of the basic channel portion is received in the end portion of the adjacent channel body to interconnect the two basic channel bodies, and wherein fixing means are provided to fix the basic channel bodies together. In a possible embodiment one of the basic channel bodies has at least one bendable tongue and the other of the basic channel bodies has at least one corresponding opening through which the tongue can be inserted, wherein the tongue can be folded over an edge of the opening so as to fix the basic channel bodies together.

Known support channel structures have straight channel bodies that support only straight lengths of pipe. In practise plastic pipes have bends and can have branches, e.g. T-parts.

Increasing the length of pipe that is supported is achieved by a pipe support part generally having an open top channel shape, the support part having an end portion for coupling with an end of another support channel body, wherein the support part is connectable to a similar support part in such a way that the interconnected support parts can be arranged in different angular orientations with respect to each other.

In use the end portion of the support part is connected to a channel body of another type, e.g. a basic channel body.

The pipe support part can be assembled with at least one other similar pipe support part into an articulate support channel joint for supporting a pipe bend or a branch piece of a pipe. The at least two pipe support parts are interconnected in such a way that they can be arranged in different angular orientations with respect to each other.

The pipe support part and the articulate support channel joint according to the invention provides a means to support the pipe also at bends or branches. Furthermore it provides flexibility, because the pipe support parts constituting the articulate support channel joint can be arranged in different angles adjusted to the angle of the pipe bend or branch to which the support channel joint is mounted. The support of pipe bends increases furthermore the fire safety, because the entire length of a pipe can be supported and protected against fire and heat from below.

In a preferred embodiment the support part has a receiving end section and a connecting end section, the receiving end section having an arched channel wall in cross section for receiving the end of another channel body, the connecting end section having means for interconnecting with the connecting end section of another support part.

In a practical embodiment the connecting end section has a substantially flat bottom and (manually) bendable upstanding side walls which are at least partially separated from the bottom, such that the side walls are bendable into a curve. The flat bottoms of two or more connecting end sections are placed on top of each other such that they partially overlap.

In a possible practical embodiment, the bottom of the connecting end portion is near its end provided with a through hole for a hinge member. The hinge member can be passed through the through holes such that the connecting end sections of the pipe support parts can be interconnected and can be rotated about said hinge member.

It is also possible to provide an embodiment wherein the connecting end section is provided with a hinge member as a connection means, which hinging member is connectable with a complementary hinge member of another similar pipe support part, or with a through hole of another pipe support part, so as to form a hinging arrangement. Preferably the hinge member is integral with the connecting end section. The integral hinge member could be attached to the connecting end section e.g. by welding, but is preferably formed out of one piece with the connecting end section.

The hinge member or hinge members define a hinging axis that extends preferably substantially perpendicular to the radius of curvature of the pipe to be supported extends. In practice the hinge axis will be substantially vertical. The interconnected pipe support parts can be swiveled relative to each other around the hinging axis. Thus, the assembly of pipe support parts according to the invention can be readily adjusted to support pipe bends with different bend radii and angles in the pipeline to be supported.

Preferably the pipe support part is made of metal, more preferably it is formed in one piece from metal sheet material. The use of metal provides the advantage that it provides better resistance against heat and fire from below and thus better support and protection of the pipe.

In a possible embodiment the receiving end section and the connecting end section each have a longitudinal axis, wherein said longitudinal axes are parallel to each other.

This aspect also relates to an articulate support channel joint for supporting a pipe bend or a branch piece of a pipe, said support channel joint comprising at least two pipe support parts as set out in the above, wherein the at least two pipe support parts are interconnected in such a way, possibly by a hinge arrangement, that they can be arranged in different angular orientations with respect to each other. By means of the hinging arrangement the receiving end sections can be swivelled in an orientation such that they can be aligned with and connected to other channel bodies (e.g. basic channel bodies) of the pipe supporting channel.

It must be noted that the term "articulate" used throughout the application is not limited to joint structures having a hinging arrangement with a hinging member. Also other joints that provide the articulation and adjustability are meant to fall within the term "articulate". A practical example of another articulate support part could include a bendable joint.

A support channel for a pipe, may comprise at least two basic channel bodies which extend under an angle with respect to each other, said basic channel bodies each having an elongate form with an arched channel wall seen in cross section, the support channel furthermore comprising at least one articulate support channel joint as described in the above, which articulate support channel joint is arranged between and coupled to the end portions of said two basic channel bodies.

The support channel can be suspended by means of pipe clips or pipe hangers suspending from a ceiling or other support structure. The pipe clips or pipe hangers can be arranged around the pipe and channel parts. In a possible arrangement the pipe clips can be arranged around the pipe support part according to the invention at the articulate support channel joints.

It was found that a problem that occurs with support channels as are mentioned at the outset, is that through condensation of room air a fluid film arises between the inner surface of the channel and the outer surface of the pipe. This fluid film becomes permanent and deteriorates the quality of the plastic pipe and will lead to haircracks in the pipe and eventually to failure of the pipe.

This problem can be overcome by a support channel as described at the outset, wherein spacer elements are arranged on the inner surface of the channel.

The spacer elements inhibit a surface contact between the pipe outer surface and the channel inner surface and prevent that a fluid film can build up between them.

In a preferred embodiment the channel is made of metal. Preferably it may made of thin metal of about 0,8 mm thickness. The length of the channel pieces can be 2-3 m.

The spacer elements are preferably non-metallic, in particular a plastic material or an elastomer material is preferred.

The spacer elements may be formed as strips. The strips can be arranged on the inner side of the channel in tangential direction, in longitudinal direction, or a combination thereof (spiral shape).

Alternatively, the spacer elements can also be formed as spacer blocks.

A configuration in which spacer strips and spacer blocks are used is also conceivable. The spacer elements may be attached to the inner side of the channel in several ways. One option is to adhere the spacer elements to the inner surface of the channel e.g. by means of an adhesive. The plastic or elastomer could for example also be extruded as a strip directly on the inner surface of the channel body.

Another possible embodiment has openings provided in the channel and the spacer elements have one or more attachment members which are received in said openings so as to connect the spacer elements to the channel body.

Preferably the spacer elements have an outer engagement member that engages on the outer surface of the channel body, and a bridge member extending through the opening in the channel member that is interconnected with the outer engagement member and the spacer element.

Preferably, the attachment members are substantially mushroom shaped protrusions with a head and a stem, which protrusions are inserted through the openings, such that the head of the mushroom shape engages the outer side of the channel body and forms the outer engagement member and the stem forms the bridge member.

In another embodiment the spacer element is formed as a strip and the outer engagement member is a strip that extends in the same direction as the strip-shaped spacer element, wherein, preferably, the strip-shaped spacer element and the strip shaped outer engagement member are extruded on the inner side and outer side of the channel body respectively, wherein the bridge members are formed by extruded melt that has flown into the openings in the channel body during extrusion.

In a particular practical embodiment the arch of the channel body extends over more than 180°. As the arch extends over more than 180° the channel body can be snapped on the plastic pipe.

Alternatively, the invention can be defined as follows: a support channel for a pipe, comprising a channel body having an elongate form with an open top, wherein spacer elements are arranged on the inner surface of the channel body.

The invention also relates to a method to manufacture a support channel as described in the above.

The invention will be described in more detail in the following description with reference to the drawing, in which:
Fig.1 shows in a view in perspective an interconnecting channel body of a support channel according to a first embodiment according to the invention,
Fig. 2 shows the interconnecting channel body of Fig. 1 while it is connected to a basic channel body of the support channel,
Fig. 3 shows in a view in perspective an interconnecting channel body of a support channel according to a second embodiment not according to the invention,
Fig. 4 shows in a view in perspective a support channel for a pipe according to the second embodiment including the interconnecting channel of Fig. 3,
Fig. 5 shows in a view in perspective an interconnecting channel body of a support channel according to a third embodiment according to the invention,
Fig. 6 shows the interconnecting channel body of Fig. 5 during installation, and
Fig. 7 shows in a view in perspective a support channel for a pipe according to the third embodiment of the invention including interconnecting channels of Fig. 6,
Fig. 8 shows in a view in perspective a pipe support part,
Fig. 9 shows in a view in perspective a possible embodiment of an articulate support channel joint including two pipe support parts of Fig. 8,
Fig. 10 shows in a view in perspective a possible embodiment of an articulate support channel joint including three pipe support parts of Fig. 8,
Fig. 11 shows in a view in perspective a support channel joint of Fig. 9 connected to a straight channel body,
Fig. 12 shows in a view in perspective a support channel at a pipe bend,
Fig. 13 shows in a view in perspective an alternative example how a pipe support part according to the invention can be connected to another support channel body, and
Fig. 14 shows in a view in perspective yet another alternative example how a pipe support part according to the invention can be connected to another support channel body.
Fig. 15 shows a cross section of a pipe with a support channel clamped on its underside,
Fig. 16 shows in a view in perspective a first embodiment of a support channel ,
Fig. 17 shows in a view in perspective a second embodiment of a support channel,
Fig. 18 shows in a view in perspective a third embodiment of a support channel ,
Fig. 19 shows in a view in perspective a fourth embodiment of a support channel , and
Figs. 20 - 22 show in a view in perspective a fifth embodiment of a support channel.

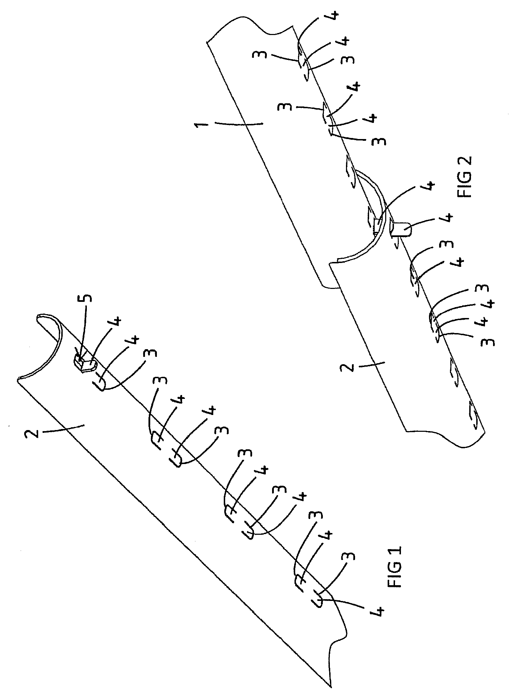

In Figs 1 and 2 is illustrated a connection between a basic channel body 1 and support channel joint 2 which is an interconnecting channel body 2. The basic channel body and the interconnecting channel body are preferably made of metal. It can be formed out of sheet metal.

A support channel in which in use a pipe is received, is made up of main channel bodies 1 which in a possible embodiment are interconnected by intermediate interconnecting channel bodies 2. In the shown embodiment of Figs 1 and 2, both the basic channel body 1 and the interconnection channel body 2 are provided with generally U-shaped through slits or cutouts 3 in the bottom such that bendable tongues 4 are formed in the bottom. In the embodiment shown the U-shaped slits 3 are arranged in pairs with the top of the U-shapes facing towards each other. As is shown in Fig. 2, the end portion of the basic channel body 1 is laid in the end portion of the interconnecting channel body 2. In the example shown the last lips 4', 4 are bended out of the surface of the respective channel bodies 1 and 2 towards the outer side. By bending away the tongue 4, an opening 5 is created in the interconnecting channel body 2. Through the opening 5 the tongue 4' of the basic channel body can be inserted as is shown in Fig. 2. After the outer side of the basic channel body 1 rests on the inner side of the interconnecting channel body 2 the tongues 4, 4' may be folded over an edge of the opening 5 to fix the two channel bodies 1 and 2 together.

In the example of Fig. 2 only one tongue 4 of each of the channel bodies 1 and 2 is bended out. It should be understood though that also a larger overlap between the channel bodies 1 and 2 can be arranged and that more than one tongue 4 is bended out and folded in each channel body 1 and 2. If at least two lips per channel body 1 and 2 are bended out and folded as described in the above, the connection between the channel bodies 1 and 2 is fixed in two axial directions, which is advantageous.

In general the basic channel bodies 1 will have a considerably greater length than the interconnecting channel bodies. It must be noted however, that the fixing structure with the bendable tongues 4, can also be used to interconnect directly two basic channel bodies 1 in a similar way as is described with reference to Figs 1 and 2. This embodiment is also within the present invention.

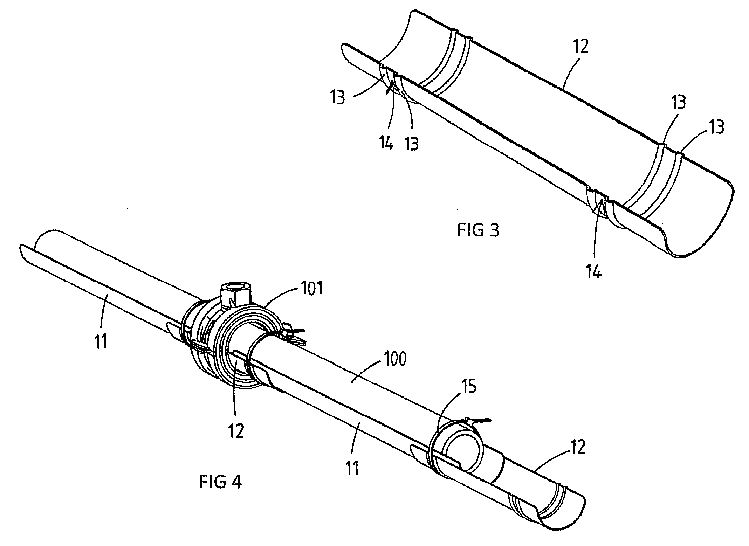

In Fig. 3 another interconnecting channel body 12 is shown. This interconnecting channel body 12 can be formed out of sheet metal.

The interconnecting channel body 12 has at its end regions two parallel tangential ribs 13 formed in the wall. The tangential ribs 13 protrude towards the outer side of the channel body 12 and define between them a receiving region 14 on the outer side of the channel body 12. In the receiving region 14 in use a binding means can be accommodated.

In Fig. 4 is shown a practical embodiment of a support channel in which the support channel is constituted by basic channel bodies 11, which in this case can be basic metal channel bodies without further specific features, and interconnecting channel bodies 12. The end portions of two basic channel bodies 11 are laid in the end portions of an interconnecting channel body 12 located between the basic channel bodies. It is shown in Fig 4 that a pipe100, which may be a plastic pipe, is received in the support channel. In order to fix a basic channel body 11, the interconnecting channel body 12 and the pipe 100 together a binding means, in this case a tie wrap 15 is arranged around the interconnecting channel body at the receiving region 14 between the tangential ribs 13 and the pipe 100, so as to tighten the pipe, the basic channel body 11 and the interconnecting channel body 12 together.

The pipe 100 can be suspended with the support channel by means of pipe clips or pipe hangers. In Fig. 4 is illustrated how a pipe clip 101 is arranged around the pipe 100 and the interconnecting channel body 12. The pipe clip 101 is located between the binding means 15 tightening together the channel bodies 11 and 12. By arranging the pipe clip 101 around the interconnecting channel body 12 which receives the end portions of the basic channel bodies, the pipe and its support channel are firmly supported.

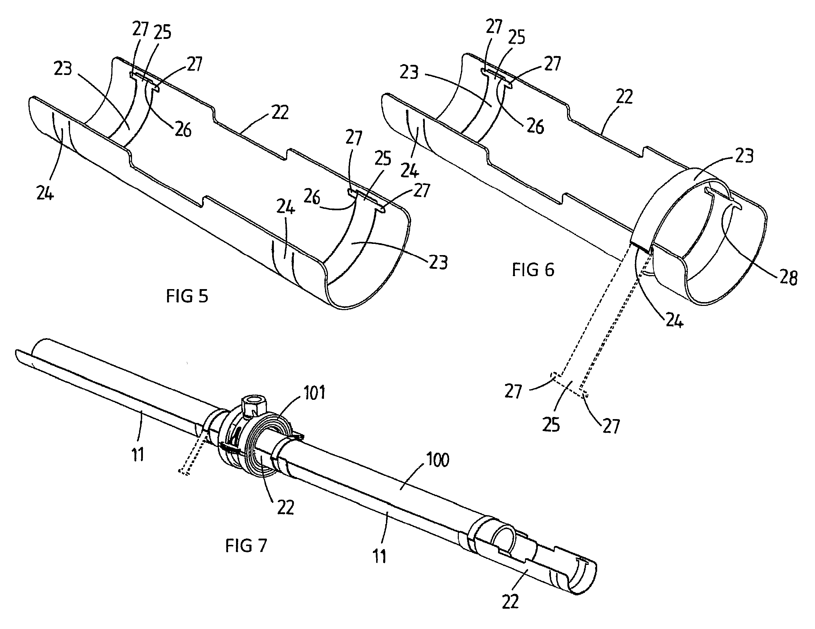

In Fig. 5 yet another interconnecting channel body 22 is shown. The interconnecting channel body 22 can be formed of sheet metal.

In this embodiment the channel body 22 has at either end portion a strip 23 of which the contour is cutout of the wall of the channel body. The strip 23 extends in a pre-assembly state generally in a tangential direction of the wall of the channel body as is shown in Fig. 5.

The strip is at one end 24 attached to the channel body 22.

The end opposite the fixed end 24 is a free end having a head 25. The head 25 of the strip 23 has lateral protrusions 27, such that a sort of T-shape is formed. Just above the contour of the head of the strip 23 is provided a recess 26 which has the same width as the strip 23.

In use the strip 23 can be bended out of the channel body 22 and then folded backwards over the open end of the channel body 22 as is illustrated in Fig. 6 at the right end of the channel body 22. The head 25 with the lateral protrusions 27 is inserted through the T-shaped cutout 28 that is created by bending the strip 23 and its head 25 out of the channel body 22. By sliding the head 25 then upwards into the cutout 26, the lateral protrusions 27 will engage behind the side edges of the cutout 26. Thus the head 25 of the strip 23 is then fixed to the channel body 22.

In Fig. 7 is shown a practical embodiment of a support channel in which the support channel is constituted by basic channel bodies 11, which in this case can be basic metal channel bodies without further specific features, and interconnecting channel bodies 22. The end portions of two basic channel bodies 11 are laid in the end portions of an interconnecting channel body 22 located between the basic channel bodies 11.

It is shown in Fig. 7 that a pipe 100, which may be a plastic pipe, is received in the support channel. During mounting the strips 23 are bended out of the channel bodies 22 and folded over the pipe 100. The head 25 of the strip is attached to the interconnecting channel body 22 as is described in the above. Thus, the pipe 100, the basic channel body 11 and the interconnecting channel body 22 are tightened together.

The pipe 100 can be suspended with the support channel by means of pipe clips or pipe hangers. In Fig. 7 is illustrated how a pipe clip 101 is arranged around the pipe 100 and the interconnecting channel body 22. The pipe clip 101 is located between the strips 23 tightening together the channel bodies 11 and 22. By arranging the pipe clip 101 around the interconnecting channel body 22 which receives the end portions of the basic channel bodies, the pipe and its support channel are firmly supported.

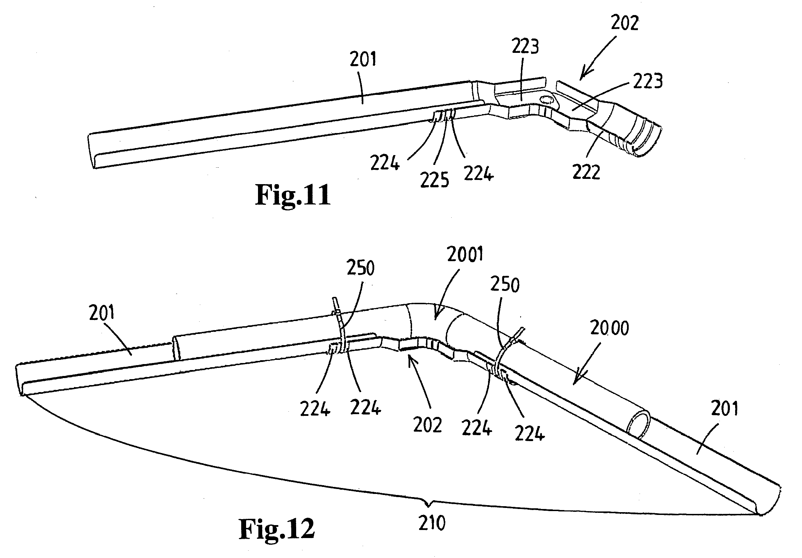

In Fig. 12 is shown a support channel structure 210 for a pipe 2000 at the location of a pipe bend 2001. The support channel 210 comprises in the figure two basic channel bodies 201 that extend under an angle with each other, in the example in Fig. 12 about 90°. The basic channel bodies 201 have an elongate form with an arched channel wall seen in cross section. The basic channel bodies 201 in this case can be basic metal channel bodies without further specific features.

The basic channel bodies 201 are interconnected by an interconnecting part 202. The interconnecting part 202 is an adjustable support channel joint that supports the pipe bend 2001. The support channel joint 202 is an articulate part generally configured as an elbow.

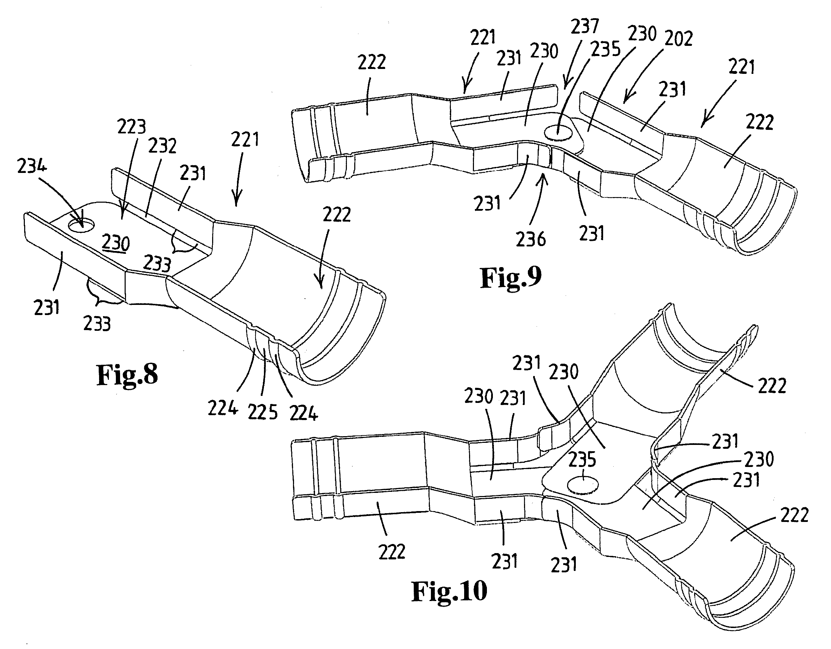

The articulate interconnecting part 202 comprises in the embodiment shown in Fig. 12 two pipe support parts 221 which are interconnected as can be seen in Figs 9 and 11.

In Fig. 8 is shown a pipe support part 221 in a state before assembly with another support part 221. The pipe support part 221 has generally a channel shape. It is preferably made of metal, most preferably formed out of one piece of metal sheet material.

The pipe support part 221 comprises a receiving end section 222 and a connecting end section 223. The receiving end section 222 has an open-top half cylindrical shape. Thus it has in cross section an arched shape. The arched shape has an inner diameter that is preferably slightly larger than the outer diameter of the basic channel bodies 201. Thus the end portions of the basic channel bodies can be received in the receiving end section 222 of the pipe support part 221 as can be seen in Fig. 11 on the left end of the articulate interconnecting part 202.

In this particular embodiment the receiving end section 222 is provided at its end regions with two parallel tangential ribs 224 formed in the wall. The tangential ribs 224 protrude towards the outer side of the receiving end section 222 of the channel-like body 221 and define between them a receiving region 225 on the outer side of the receiving end section 222. In use a binding means can be accommodated in the receiving region 225.

In Fig. 12 is shown that the end portions of two basic channel bodies 201 are laid in the end portions of an articulate support channel joint 202 located between the basic channel bodies 201. It is shown in Fig. 12 that a pipe 2000, which in practise will often be a plastic pipe, is received in the support channel. In order to fix a basic channel body 201, the articulate support channel joint 202 and the pipe 2000 together a binding means, in this case a tie wrap 250 is arranged around the receiving end section 222 of adjustable support channel joint at the receiving region 225 between the tangential ribs 224 and the pipe 2000, so as to tighten the pipe, the basic channel body 201 and the pipe support part 221 together.

It must be noted here that instead of tie wraps also other binding means, e.g. such as wire, can be used.

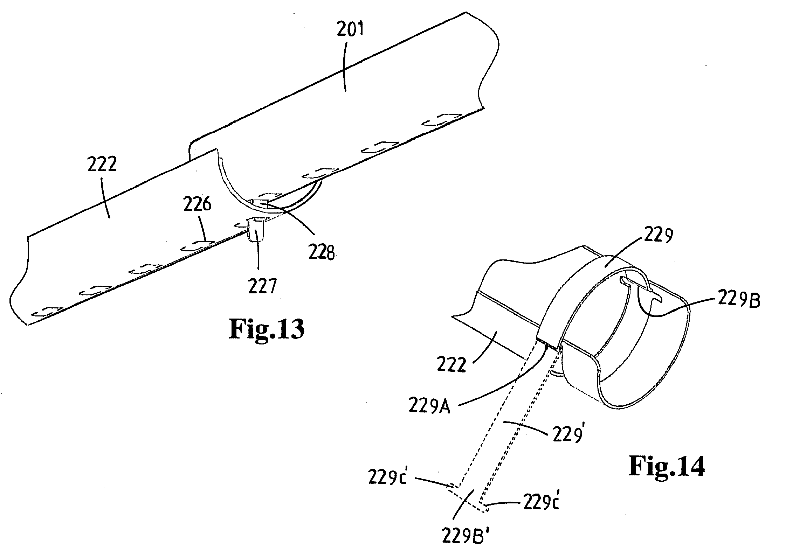

It must also be noted that the basic channel bodies could be attached to the receiving end sections 222 in another way as is shown in Fig. 12. For example in a possible alternative embodiment shown in Fig. 13 comparable to Fig. 6, the basic channel body 201 and the receiving end section 222 can each have cutouts 226 in their channel wall such that bendable tongues 227 are formed. The bendable tongues 227 can be bended out of the channel body surfaces and inserted in an opening formed in the associated channel body 201 by bending away a tongue 228 in that channel body 201.

In yet another possible embodiment illustrated in Fig. 14 comparable to Fig. 2, the receiving end section 222 has at its end regions a tangential strip which contour is cut out of the channel wall, which strip 229 is in use broken out of the wall of the receiving end section 222 such that one end 229A of the strip remains attached with the receiving end section 222 and the strip is folded over the open top of the receiving end section and the free end 229B of the strip is attached to the receiving end section 222 to bind the basic channel body 201, the receiving end section 222 and a pipe 2000 received in the support channel together. Preferably the free end of the strip has lateral protrusions 229C.

The connecting end section 223 has a flat bottom 230 as can be seen in Fig. 8. At the sides of the bottom 230 upstanding sidewalls 231 are formed. The side walls 231 are connected to the bottom 230 at an end region 233 at the side of the receiving end section 222. However at a greater length of the side walls 231, the bottom 230 and the side walls 231 are cut free from each other. Consequently the bottom 230 and side walls 231 are separated by a slit 232 towards the free end of the bottom 230 and the side walls 231. The feature that the side walls 231 and the bottom 230 are cut free from each other allows the initially straight side walls 231 to be bended outwards as will be described with reference to Fig. 9.

In the bottom 230 near the free end thereof a through hole 234 is provided. The through hole 234 allows the passage of a hinge member as will be described with reference to Fig. 9.

In Fig. 9 an articulate support channel joint 202 having two pipe support parts 221 is shown. To assemble the articulate support channel joint 202 the bottoms 230 of the respective pipe support parts 221 are arranged in an overlapping fashion, such that the holes 234 in the respective bottoms 230 are aligned. A hinge member 235, e.g. a hinge pin, a rivet, or another suitable separate hinge member, can be arranged through the holes 234 to connect the pipe support parts 221. The hinge axis defined by the hinge member extends substantially perpendicular to the bottom 230. The pipe support parts 221 can swivel with respect to each other, whereby the pipe support parts 221 can be adjusted to an angular position corresponding to the angle of the pipe bend 2001 (see Fig. 12). The initially straight side walls 231 can be bended outwards by hand at the inside bend 236 as can be seen in Fig 9. At the outside bend 237, the side walls 231 can remain straight in this specific embodiment.

In another possible embodiment (not shown), the connecting end section 223 can be provided with an integral hinge member part, preferably at the bottom 230. The integral hinge member part can be coupled to another complementary hinge member part of another pipe support part. Alternatively, it is also possible that the connecting end section 223 of one of the pipe support parts has an integral hinge member, and the other pipe support part has a bore as is described in the above, through which the integral hinge members is passed to form a hinge arrangement.

In Fig. 10 another possible embodiment of an articulate support channel joint is shown. In this embodiment the articulate support channel joint is constituted by three pipe support parts 221. Again the bottoms 230 are arranged such that they partially overlap each other and the holes 234 are aligned. A hinge member 235 connects the three pipe support parts 221. In this embodiment the receiving end sections 222 are arranged such that they extend in an angle of about 120° with respect to each other. In that event all the side walls 231 are at an inside bend and have to be bended by hand.

It must be noted that the three pipe support parts 221 can be adjusted into a different orientation as shown in Fig 10. A practical embodiment could be where two receiving end sections 222 are in line with each other and the third receiving end section is under an angle.

For example the third receiving end section 222 can be at an angle of 90° with respect to the other two, such that a T-piece of the pipe can be supported. However also another angle is conceivable to support a branch location in a pipe.

It is also thinkable that four pipe support parts 221 are interconnected to form an articulate support channel joint to support a crossing in a pipeline.

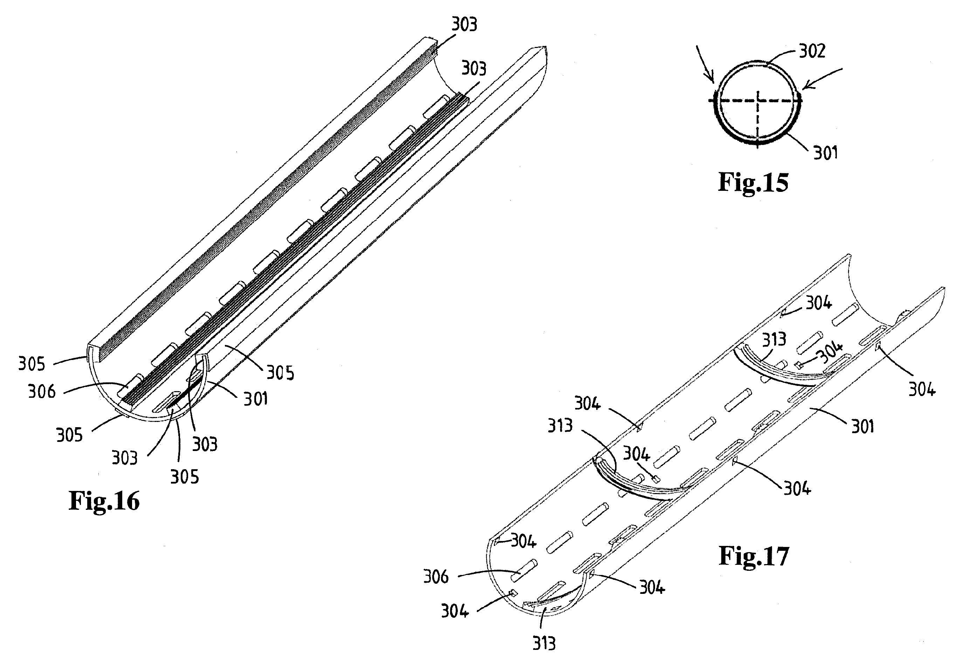

In the Figs 15 - 22 are shown different embodiments of a support channel for a plastic pipe.

The support channel has a metal channel body 301, possibly sheet metal with a thickness of about for example 0,8 mm. The length of a channel may vary, but can for example be up to 3 m in length. The channel body 301 is shaped as a hollow cylinder sectioned over the longitudinal direction. In this specific embodiment the arch of the channel wall seen in cross section extends over more than 180°. In this specific embodiment the outer diameter of a pipe 302 that the channel body 301 can be used on and the inner diameter of the channel body 301 are adapted to each other such that the channel body 301 can be clicked on the pipe 302 as is illustrated in Fig. 15. It must be noted however, that for the invention it is not necessary that the channel body can be snapped on the pipe. It is just as well possible to have a channel body with an arch less than 180°. If the fitter wants to fix the pipe to the support channel in such an embodiment (i.e. an embodiment in which the channel body is not clamped on the pipe), he may use for example wire, tie raps, tape or other suitable means as fixing means.

In Fig. 16 is shown a first embodiment of a support channel. This support channel has spacer strips 303 (in this example four) of plastic or an elastomeric material such as rubber arranged on the inner side of the channel body 301. The spacer strips 303 extend in the longitudinal direction of the channel body 301. The strips 303 function as spacer elements to space apart the outer surface of the pipe and the inner surface of the channel body 301. This to mitigate the problem of moist film forming between the mentioned surfaces.

In the specific embodiment shown in Fig. 16, two of the spacer strips 303 are arranged at the upper edges of the metal channel body 301.

The channel body 301 is provided with openings 304 as can be seen in Fig. 17. The openings provides a means to attach the spacer strips 303 to the channel body 301. In a possible embodiment the material of the spacer strips 303 is extruded on the metal sheet material of the channel body 301. If also on the other side of the metal sheet material a thin layer of plastic 305 (see Fig. 16) or elastomer is extruded at the same time, a material bridge will be formed through the openings 4. Thereby a reliable mechanical retaining structure for the strips 3 is provided.

It is conceivable to extrude the strip material on the channel body 301 whilst it is already formed as a channel. However it is also conceivable to extrude the spacer strips 303 on a flat metal sheet provided with the holes 304 and after forming of the spacer strips 303 bend the flat sheet into a channel form as shown.

The channel body also has lines of elongate openings 306 in them. These openings 306 provide some ventilation when a pipe is arranged in the channel, thereby mitigating the problem of moist residing on the pipe outer surface which can lead to a degrading of the pipe material.

In Fig. 17 is shown an embodiment of a support channel wherein pieces of spacer strip 313 extend diagonally with respect to the longitudinal axis of the channel body 301.

Thus the spacer strips 313 extend in both the transverse and the longitudinal direction. In this embodiment the spacer strips 313 are not attached in the openings 304, but may for example be adhered to the inner surface of the channel body 301. Although not shown here it is however also conceivable to provide the spacer strips 313 on the back side with protrusions that can be inserted in the openings 304 to attach the spacer strips 313 to the channel body 301.

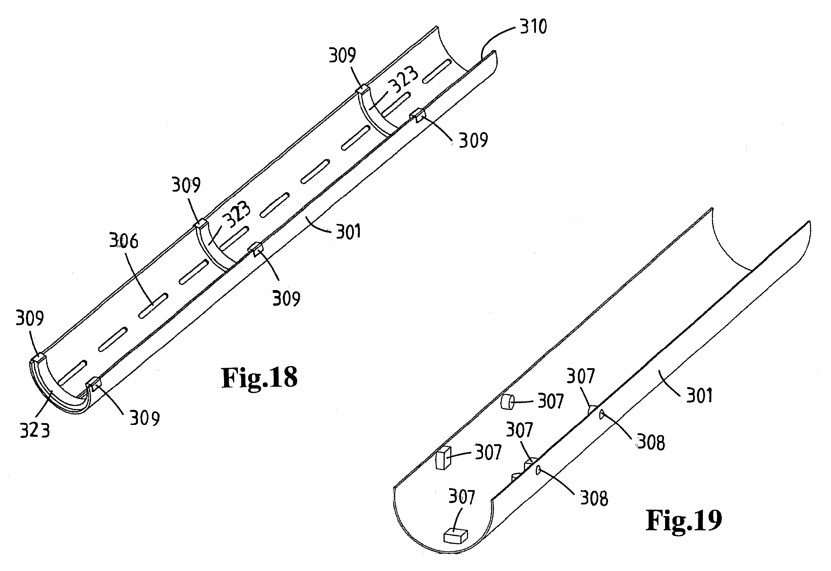

In Fig. 19 is shown an embodiment of a support channel wherein several spacer blocks 307 are distributed over the inner surface of the channel body. This channel body 301 has openings distributed over its surface. The spacer blocks have a boss 308 or another attachment protrusion for example shaped as a mushroom that can be inserted through the openings to attach them to the channel body 301.

In Fig. 18 is shown an embodiment of a support channel in which spacer strips 323 are arranged in a transverse direction of the channel body 301. In this specific embodiment the spacer strips 323 are at their respective ends provided with a gripping arrangement 309 that grips over the edge 310 of the channel body 301.

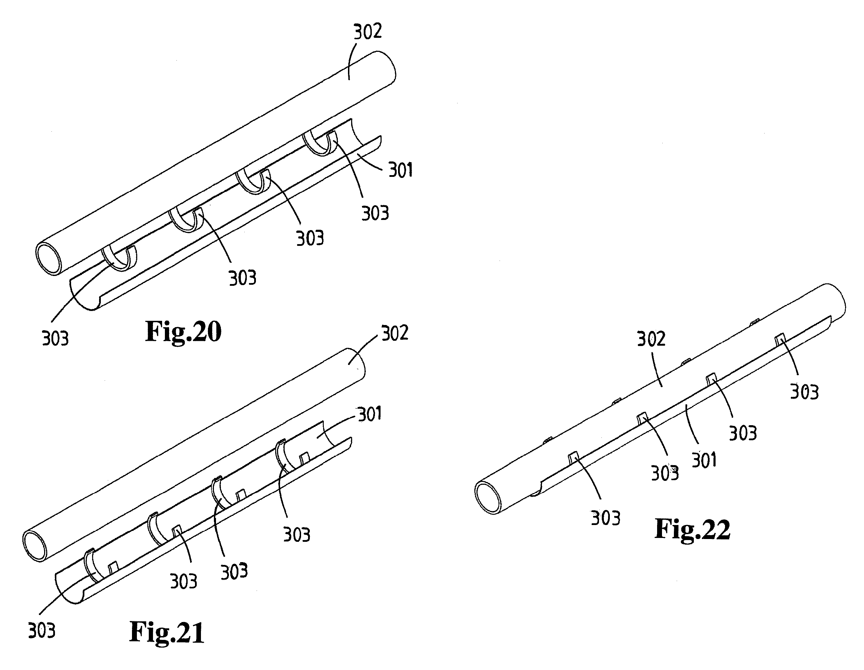

Yet another embodiment of the support channel is illustrated in Figs 20-22. In this embodiment loose spacer strips 333 shaped as ring segments are arranged in the metal channel body 301. The ring segments 333 extend over a longer arch than the channel body does. Preferably the ring segments extend over an arch of more than 200°. After the ring segments are placed in the channel body 301 a pipe 302 can be arranged in the ring segments 333 as is shown in Fig. 22.

## Claims

1. Support channel for a pipe, comprising a plurality of basic channel bodies (1) having an elongate form with an arched channel wall seen in cross section, and furthermore comprising at least one interconnecting channel body (2) that is arranged between the end portions of two of the basic channel bodies, wherein the end portions of the basic channel portions are received in the interconnecting channel body, and wherein fixing means (4, 5) are provided to fix the interconnecting channel body and the basic channel bodies together, wherein one of the basic channel body or the interconnecting channel body has at least one bendable tongue (4) and the other of said basic channel body or the interconnecting channel body has at least one corresponding opening (5) through which the tongue can be inserted, **characterised in that** the tongue can be folded over an edge of the opening so as to fix the basic channel body and the interconnecting channel body together, and wherein the basic channel body and the interconnecting channel body each have cutouts (3) in their channel wall such that bendable tongues are formed, wherein the bendable tongues can be bent out of the channel body surfaces and inserted in an opening formed in the associated channel body by bending away a tongue **in that** channel body.

2. Support channel for a pipe, comprising a plurality of basic channel bodies (1) having an elongate form with an arched channel wall seen in cross section, and furthermore comprising at least one interconnecting channel body (2) that is arranged between the end portions of two of the basic channel bodies, wherein the end portions of the basic channel portions are received in the interconnecting channel body, and wherein fixing means (23) are provided to fix the interconnecting channel body and the basic channel bodies together, **characterised in that** the interconnecting channel body has at its end regions a tangential strip (23) which contour is cut out of the channel wall, which strip is in use broken out of the wall of the channel element such that one end remains attached with the interconnecting channel body and the strip is folded over the open top of the channel body and the free end of the strip is attached to the channel body to bind the basic channel body, the interconnecting channel body and a pipe receivable in the support channel together.

3. Support channel according to claim 2, wherein the free end of the strip has transversely extending lugs.

4. Pipe suspending system comprising a support channel according to any one of the preceding claims, furthermore comprising at least one pipe clip (101) or pipe hanger suspending from a support, wherein the pipe clip or pipe hanger is arranged around the support channel and the pipe receivable in the support channel at the location of the interconnecting channel body.

## Patentansprüche

1. Unterstützungskanal für ein Rohr, aufweisend mehrere Grundkanalkörper (1), die eine langgestreckte Form mit einer im Querschnitt gesehen gewölbten Kanalwand haben, und darüber hinaus mindestens einen Zwischenverbindungskanalkörper (2) aufweisend, der zwischen den Endabschnitten zweier der Grundkanalkörper angeordnet ist, wobei die Endabschnitte der Grundkanalabschnitte im Zwischenverbindungskanalkörper aufgenommen sind, und wobei Fixierungseinrichtungen (4, 5) vorgesehen sind, um den Zwischenverbindungskanalkörper und die Grundkanalkörper aneinander zu fixieren, wobei einer, der Grundkanalkörper oder der Zwischenverbindungskanalkörper, mindestens eine biegbare Zunge (4) hat,
und der andere der besagten Grundkanalkörper oder Zwischenverbindungskanalkörper mindestens eine entsprechende Öffnung (5) hat, durch welche die Zunge eingesteckt werden kann,
**dadurch gekennzeichnet, dass** die Zunge über einen Rand der Öffnung geklappt werden kann, um den Grundkanalkörper und den Zwischenverbindungskanalkörper aneinander zu fixieren, und wobei der Grundkanalkörper und der Zwischenverbindungskanalkörper jeweils Ausschnitte (3) in ihrer Kanalwand haben, so dass biegbare Zungen gebildet sind, wobei die biegbaren Zungen aus den Kanalkörperflächen herausgebogen und in eine im zugehörigen Kanalkörper gebildete Öffnung eingesteckt werden können, indem eine Zunge in diesem Kanalkörper umgebogen wird.

2. Unterstützungskanal für ein Rohr, aufweisend mehrere Grundkanalkörper (1), die eine langgestreckte Form mit einer im Querschnitt gesehenen gewölbten Kanalwand haben, und darüber hinaus mindestens einen Zwischenverbindungskanalkörper (2) aufweisend, der zwischen den Endabschnitten zweier der Grundkanalkörper angeordnet ist, wobei die Endabschnitte der Grundkanalabschnitt im Zwischenverbindungskanalkörper aufgenommen sind, und wobei Fixierungseinrichtungen (23) vorgesehen sind, um den Zwischenverbindungskanalkörper und die Grundkanalkörper aneinander zu fixieren, **dadurch gekennzeichnet, dass** der Zwischenverbindungskanalkörper an seinen Endbereichen einen tangentialen Streifen (23) hat, dessen Kontur aus der Kanalwand ausgeschnitten ist, welcher Streifen im Gebrauch aus der Wand des Kanalelements so herausgebrochen wird, dass ein Ende mit dem Zwischenverbindungskanalkörper befestigt bleibt, und der Streifen über die offene Oberseite des Kanalkörpers geklappt wird, und das freie Ende des Streifens am Kanalkörper befestigt wird, um den Grundkanalkörper, den Zwischenverbindungskanalkörper und ein in den Unterstützungskanal aufnehmbares Rohr miteinander zu verbinden.

3. Unterstützungskanal nach Anspruch 2, wobei das freie Ende des Streifens sich quer erstreckende Ansätze hat.

4. Rohraufhängungssystem, einen Unterstützungskanal nach einem der vorhergehenden Ansprüche aufweisend, darüber hinaus mindestens eine von einer Halterung abgehängte Rohrschelle (101) oder Rohraufhängung aufweisend, wobei die Rohrschelle oder Rohraufhängung an der Stelle des Zwischenverbindungskanalkörpers um den Unterstützungskanal und das im Unterstützungskanal aufnehmbare Rohr herum angeordnet ist.

## Revendications

1. Goulotte de support de tuyau, comprenant une pluralité de corps de goulotte de base (1) ayant une forme allongée pourvus d'une paroi de goulotte incurvée vue en coupe transversale, et comprenant en outre au moins un corps de goulotte d'interconnexion (2) qui est disposé entre les parties d'extrémité de deux des corps de goulotte de base, dans laquelle les parties d'extrémité des parties de goulotte de base sont reçues dans le corps de goulotte d'interconnexion, et dans laquelle des moyens de fixation (4, 5) sont prévus pour fixer le corps de goulotte d'interconnexion et les corps de goulotte de base les uns aux autres, dans laquelle l'un parmi le corps de goulotte de base ou le corps de goulotte d'interconnexion comporte au moins une languette flexible (4) et l'autre parmi le corps de goulotte de base ou le corps de goulotte d'interconnexion comporte au moins une ouverture correspondante (5) à travers laquelle la languette peut être insérée, **caractérisée en ce que** la languette peut être pliée par-dessus un bord de l'ouverture de manière à fixer le corps de goulotte de base et le corps de goulotte d'interconnexion l'un à l'autre, et dans laquelle le corps de goulotte de base et le corps de goulotte d'interconnexion comportent chacun des découpes (3) dans leur paroi de goulotte de façon à former des languettes flexibles, dans laquelle les languettes flexibles peuvent être écartées par flexion des surfaces de corps de goulotte et insérées dans une ouverture formée dans le corps de goulotte associé par écartement par flexion d'une languette dans ce corps de goulotte.

2. Goulotte de support de tuyau, comprenant une pluralité de corps de goulotte de base (1) ayant une forme allongée pourvus d'une paroi de goulotte incurvée vue en coupe transversale, et comprenant en outre au moins un corps de goulotte d'interconnexion (2) qui est disposé entre les parties d'extrémité de deux des corps de goulotte de base, dans laquelle les parties d'extrémité des portions de goulotte de base sont reçues dans le corps de goulotte d'interconnexion, et dans laquelle des moyens de fixation (23) sont prévus pour fixer le corps de goulotte d'interconnexion et les corps de goulotte de base les uns aux autres, **caractérisée en ce que** le corps de goulotte d'interconnexion comporte à ses régions d'extrémité une bande tangentielle (23) dont le contour est découpé dans la paroi de goulotte, laquelle bande est cassée, en utilisation, de la paroi de l'élément de goulotte de telle sorte qu'une extrémité reste attachée au corps de goulotte d'interconnexion et la bande est pliée par-dessus la partie supérieure ouverte du corps de goulotte et l'extrémité libre de la bande est fixée au corps de goulotte pour relier les uns aux autres le corps de goulotte de base, le corps de goulotte d'interconnexion et un tuyau pouvant être reçus dans la goulotte de support.

3. Goulotte de support selon la revendication 2, dans laquelle l'extrémité libre de la bande comporte des pattes s'étendant transversalement.

4. Système de suspension de tuyau comprenant une goulotte de support selon l'une quelconque des revendications précédentes, comprenant en outre au moins un collier de tuyau (101) ou un étrier de tuyau suspendu à un support, dans lequel le collier de tuyau ou l'étrier de tuyau est disposé autour de la goulotte de support et du tuyau pouvant être reçu dans la goulotte de support à l'emplacement du corps de goulotte d'interconnexion.
